# FASCICULE DE BREVET EUROPEEN

(11) **EP 4 492 971 B1**
(45) Date de publication et mention de la délivrance du brevet: **06.05.2026**
(21) Numéro de dépôt: 23713838.3
(22) Date de dépôt: 15.03.2023
(51) Int. Cl.: A01K 47/06, A01K 51/00

(54) **CADRE A PROPRIETES MAGNETIQUES POUR RUCHE**
RAHMEN MIT MAGNETISCHEN EIGENSCHAFTEN FÜR EINEN BIENENSTOCK
FRAME WITH MAGNETIC PROPERTIES FOR A BEEHIVE

(30) Priorité: 18.03.2022 FR 2202424
(43) Date de publication de la demande: 22.01.2025
(73) Titulaire: Inrimage, 38000 Grenoble (FR)
(72) Inventeur: PAIN, Xavier, 38000 Grenoble (FR); WOLOZAN, Stéphane, 38130 Echirolles (FR); MATHIEUX, Patrick, 38500 La Buisse (FR); YONNET, Jean-Paul, 38240 Meylan (FR)
(74) Mandataire: INNOV-GROUP
(86) Numéro de dépôt international: PCT/EP2023/056560
(87) Numéro de publication internationale: WO 2023/174982

(56) Documents cités:
- CN-A- 111 955 450
- FR-A1- 2 972 898
- FR-A1- 3 007 243
- KR-A- 20130 071 042
- US-A- 5 162 014

## Description

### Domaine technique de l'invention

La présente invention se rapporte à un cadre utilisable dans une ruche pour abeilles, ce cadre disposant de propriétés magnétiques.

### Etat de la technique

De manière connue, une ruche se compose principalement d'un socle formant un plateau d'envol des abeilles surmonté d'une première boîte formant le corps de la ruche prévu pour la vie de la colonie d'abeilles, ce corps étant lui-même surmonté d'une hausse prévue pour l'exploitation du miel. Une grille à reine sépare le corps de la hausse pour empêcher la reine de passer du corps à la hausse. La ruche peut comporter une seule ou plusieurs hausses ajustées sur le corps. Au sommet, la ruche comporte un toit venant refermer l'ensemble pour le protéger.

Le corps et chaque hausse sont remplis de cadres insérés verticalement et placés en parallèle. Chaque cadre comporte plusieurs montants et une partie centrale encadrée par les montants. La partie centrale peut comporter une feuille de cire pré-alvéolée dans laquelle les abeilles peuvent construire des alvéoles, destinées à recevoir le pollen et le miel. Il a également été proposé de réaliser la partie centrale sous la forme d'une plaque en matériau plastique alimentaire, cette plaque étant directement alvéolée. La demande de brevet FR2940594A1 décrit une partie centrale composée d'une plaque support pleine, recevant sur chacune de ses deux faces une plaque alvéolée. D'autres solutions ont bien entendu été proposées. Le brevet US4234985 décrit pour sa part la réalisation d'un cadre en matériau plastique.

Pour protéger les abeilles présentes dans la ruche des insectes et des parasites, le brevet US5162014 propose de créer un champ magnétique à l'intérieur de la ruche, en disposant des aimants permanents sur chaque cadre inséré dans la ruche. Les aimants permanents sont ajoutés sous la forme de bandes, disposées chacune sur un montant distinct du cadre.

La demande de brevet FR2972898 propose pour sa part de venir appliquer un champ magnétique à l'intérieur d'une ruche en venant ajouter deux aimants sur deux faces opposées du corps de la ruche.

Après étude technique, il a été constaté que le magnétisme pouvait avoir une influence non négligeable sur la santé des abeilles en réduisant leur taux de mortalité ainsi que sur leur productivité en termes de miel.

Cependant, il s'avère que les solutions magnétiques connues ne permettent pas d'obtenir un champ magnétique uniforme à l'intérieur de la ruche. Dans la demande de brevet US5162014**,** le champ magnétique obtenu peut être perturbé et n'est donc pas efficace, et dans la demande de brevet FR2972898**,** il n'est pas uniforme à l'intérieur de la ruche, car très élevé autour des aimants situés à l'extérieur de la ruche et très faible au centre de la ruche.

Le but de l'invention est donc de proposer une solution qui permet d'obtenir une induction magnétique la plus uniforme possible à l'intérieur de la ruche, que ce soit au niveau de son corps ou de chaque hausse, et disposant d'un bon niveau d'induction magnétique pour optimiser la réduction du taux de mortalité des abeilles et leur productivité.

### Exposé de l'invention

Ce but est atteint par un cadre pour ruche comprenant plusieurs montants assemblés entre eux et une plaque centrale encadrée par lesdits montants et dotée de deux faces opposées, la plaque centrale étant fabriquée à partir d'un liant auquel est ajoutée une poudre magnétique et ladite plaque centrale étant aimantée suivant une direction transversale à ses deux faces opposées.

Selon un aspect particulier de l'invention, le cadre dispose ainsi d'une aimantation orientée perpendiculairement à son plan d'insertion dans le corps ou dans la hausse de la ruche.

Selon une réalisation particulière, la poudre magnétique est une poudre de ferrite de strontium ou une poudre de ferrite de baryum.

Selon une autre réalisation particulière, la poudre magnétique est une poudre Néodyme Fer Bore.

La plaque centrale se présente sous la forme d'un élément rigide et peu déformable.

Selon une particularité, le liant est un élastomère, un polymère thermoplastique et/ou un polymère thermodurcissable.

Selon une autre particularité, le liant est du polypropylène alimentaire ou du polyamide alimentaire.

Selon une particularité, le liant est un textile tel que du coton végétal et/ou de la cellulose couché de produits minéraux (par exemple des pigments) en mélange avec des produits de durcissement, tels que par exemple de la paraffine.

Selon une autre particularité, les deux faces de la plaque sont alvéolées.

Selon une autre particularité, les montants du cadre sont réalisés en plastique et/ou en bois.

Selon une autre particularité, les montants du cadre sont réalisés dans un matériau de type plastique magnétique.

Selon une réalisation particulière, le cadre est réalisé sous la forme d'un élément monobloc.

Selon une autre réalisation particulière, la plaque est réalisée sous la forme d'un élément monobloc ou par assemblage de plusieurs modules.

Selon une particularité, la poudre magnétique est ajoutée dans une proportion comprise entre 10% et 50% du volume total.

L'invention concerne également une ruche comprenant un corps formé d'un caisson dans lequel sont placés plusieurs cadres à la verticale, les cadres étant tels que définis ci-dessus.

Selon une réalisation particulière, le corps comporte plusieurs faces latérales et en ce qu'il comporte une culasse magnétique formée de plusieurs panneaux assemblés chacun sur l'une de ses faces latérales.

L'invention concerne également une ruche comprenant au moins une hausse formée d'un caisson dans lequel sont placés plusieurs cadres à la verticale, les cadres étant tels que définis ci-dessus.

Selon une réalisation particulière, la hausse comporte plusieurs faces latérales et en ce qu'il comporte une culasse magnétique formée de plusieurs panneaux assemblés chacun sur l'une de ses faces latérales.

### Brève description des figures

D'autres caractéristiques et avantages vont apparaître dans la description détaillée qui suit faite en regard des dessins annexés dans lesquels :
- La figure 1 montre l'architecture d'une ruche vue en éclaté ;
- Les figures 2A et 2B montrent un cadre conforme à l'invention, utilisable dans une ruche telle que celle de la figure 1, respectivement vu en perspective et vu de face ;
- La figure 3 illustre un principe de magnétisation d'un cadre conforme à l'invention ;
- Les figures 4A et 4B montre en vue de dessus une hausse de la ruche, respectivement sans culasse magnétique et avec une culasse magnétique ;

### Description détaillée d'au moins un mode de réalisation

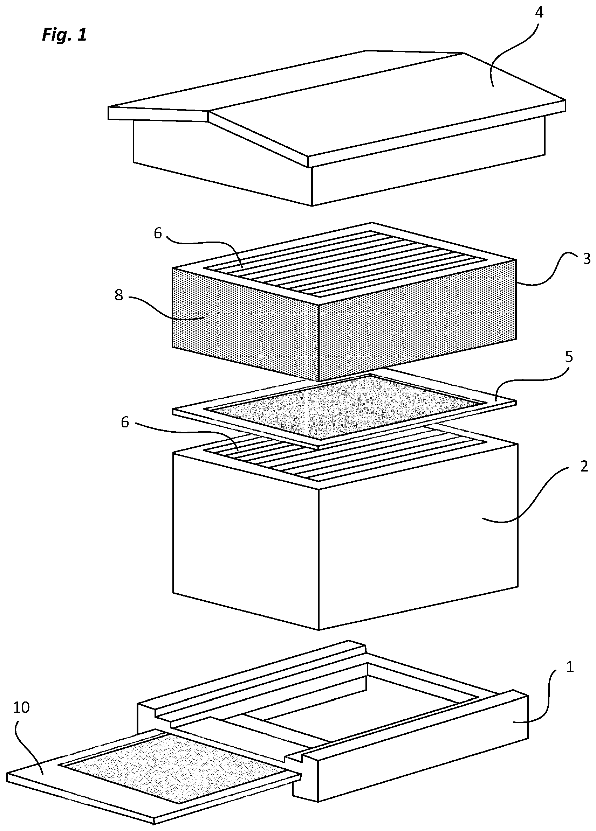

En référence à la figure 1, comme indiqué ci-dessus, une ruche comporte un socle 1 comportant une planche d'envol 10. Le socle 1 est surmonté du corps 2 de la ruche, lui-même surmonté d'une ou plusieurs hausses 3 (une seule hausse sur la figure 1) puis d'un toit 4. Une grille 5 peut être disposée entre le corps 2 et la première hausse 3 pour empêcher la reine de s'échapper.

De manière connue, le corps 2 et chaque hausse 3 sont remplis de plusieurs cadres 6 insérés verticalement. Chaque cadre 6 permet la fabrication et le stockage de miel.

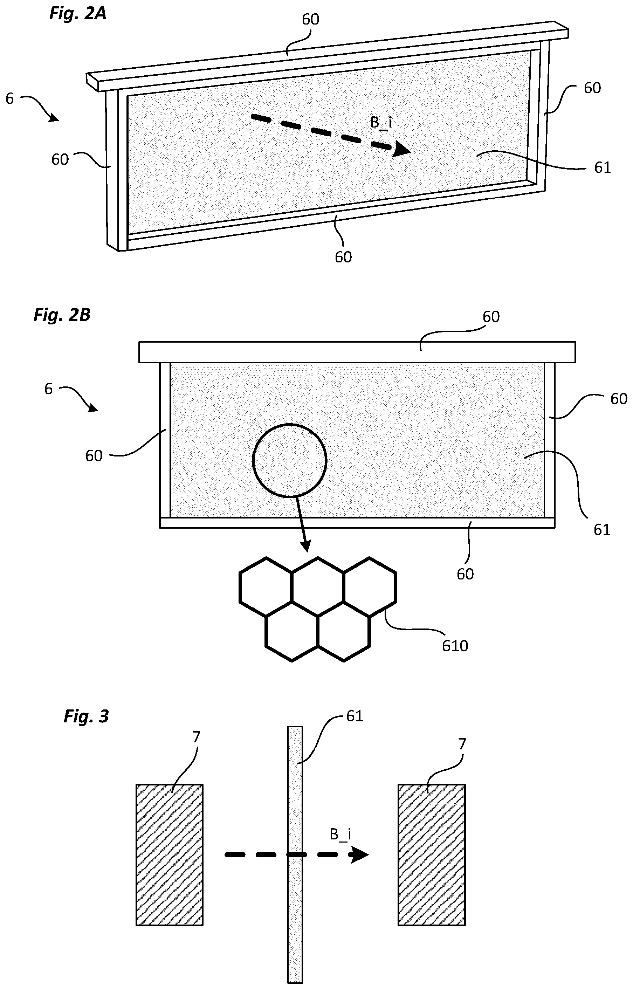

En référence à la figure 2A et à la figure 2B, un cadre 6 est de forme rectangulaire et comporte plusieurs montants 60 assemblés entre eux en rectangle, et une partie centrale 61 encadrée par les montants 60.

En règle générale, dans la ruche, chaque hausse 3 est destinée au pollen et au miel et le corps 2 de la ruche accueille le couvain d'abeilles.

Selon l'invention, la partie centrale du cadre 6 est réalisée sous la forme d'une plaque 61 comprenant des propriétés magnétiques.

La plaque 61 comporte deux faces opposées.

Pour lui conférer ses propriétés magnétiques, la plaque est fabriquée dans un matériau de type élastomère ou plastique, disposant de propriétés magnétique (le plastique magnétique peut être appelé également plasto-aimant), obtenu en mélangeant un liant de type élastomère, un liant de type polymère thermoplastique ou thermodurcissable, avec une poudre magnétique. On peut également envisager d'utiliser un liant de type cellulose ou coton végétal, matériau plus écologique que les matériaux plastiques. Dans ce dernier cas, le dépôt de cellulose ou de coton végétal est couché avec des produits minéraux (pigments) et éventuellement des matériaux de durcissement tel que de la paraffine pour durcir et rigidifier l'ensemble.

Il serait également possible d'utiliser un mélange de plusieurs de ces liants.

Le liant employé est de type alimentaire (notamment sans bisphénol A (BPA)) et peut être choisi parmi la cellulose, le coton, un élastomère ou un plastique. Le liant élastomère peut être par exemple du Nitrile ou de l'EPDM (Ethylène, Propylène, Diène Monomère). Le liant thermoplastique peut être par exemple de type polypropylène ou polyamide tel que le PA6, PA11 ou PA12. Bien entendu, d'autres matériaux pourraient être envisagés. La cellulose et le coton sont avantageusement biosourcés.

La poudre magnétique est par exemple choisie parmi une poudre de ferrite de strontium (poudre préférée car stable et neutre), une poudre de ferrite de baryum et une poudre Néodyme Fer Bore.

La poudre est ajoutée au liant dans une proportion pouvant par exemple être comprise entre 10% et 50% du volume total (liant+poudre). Les particules de ferrite sont naturellement plates. Elles peuvent être ré-orientées par un champ magnétique lors de la fabrication par injection afin de redresser les particules dans le bon plan (elles sont alors dites anisotropes) ou non (elles sont alors isotropes - mais la polarisation magnétique sera 2 à 3 fois moins performante). La proportion de poudre magnétique peut notamment être ajustée pour disposer du niveau de polarisation magnétique souhaité et d'un bon niveau d'induction magnétique entre les cadres, une fois ceux-ci placés dans la ruche.

La plaque 61 peut comporter un simple gaufrage sur lequel les abeilles peuvent venir construire des alvéoles (avec éventuellement une couche de cire) destinées à la fabrication du miel ou intégrer directement ces alvéoles 610 (figure 2B), obtenues directement lors de l'élaboration de la plaque. Les alvéoles sont alors réalisées sur les deux faces opposées de la plaque 61. Elles ne sont pas traversantes.

La plaque 61 peut être par exemple fabriquée par moulage par injection ou autre solution équivalente. La première magnétisation du cadre est avantageusement réalisée lors de l'injection mais peut être réalisée ultérieurement, puis éventuellement réitérée en cas de démagnétisation.

Il faut noter que la plaque 61 peut être réalisée sous la forme d'un élément monobloc (par exemple par moulage par injection) mais peut être également obtenue par l'assemblage de plusieurs éléments unitaires, ces éléments étant aimantés avant assemblage ou après assemblage entre eux pour former la plaque 61. Bien entendu, d'autres solutions pourraient être envisagées pour la réalisation de la plaque 61. Lorsque la plaque est destinée à comporter des alvéoles, les éléments unitaires comportent ces alvéoles et leur assemblage permet d'obtenir la plaque complète alvéolée.

En référence à la figure 3, la magnétisation peut notamment consister à placer la plaque 61 en entier, ces éléments unitaires, ou le cadre 6 en entier entre deux aimants 7, afin de polariser les particules de poudre magnétique à l'intérieur de la plaque et ainsi de magnétiser la plaque 61 (induction magnétique B_i). Les deux aimants doivent être puissant et peuvent être réalisés en Néodyme Fer Bore. D'autres solutions de magnétisation pourraient être envisagées, telles que l'usage de bobines électromagnétiques par exemple. Il faut noter qu'en raison d'un facteur de forme défavorable, il pourrait être utile de magnétiser à nouveau chaque cadre, avant son insertion dans la ruche, avant chaque nouvelle production.

Selon l'invention, la plaque 61 est magnétisée de sorte que son induction magnétique B_i soit orientée perpendiculairement à ses deux faces et donc traversant. Elle est ainsi orientée perpendiculairement au plan d'insertion du cadre 6 dans la ruche.

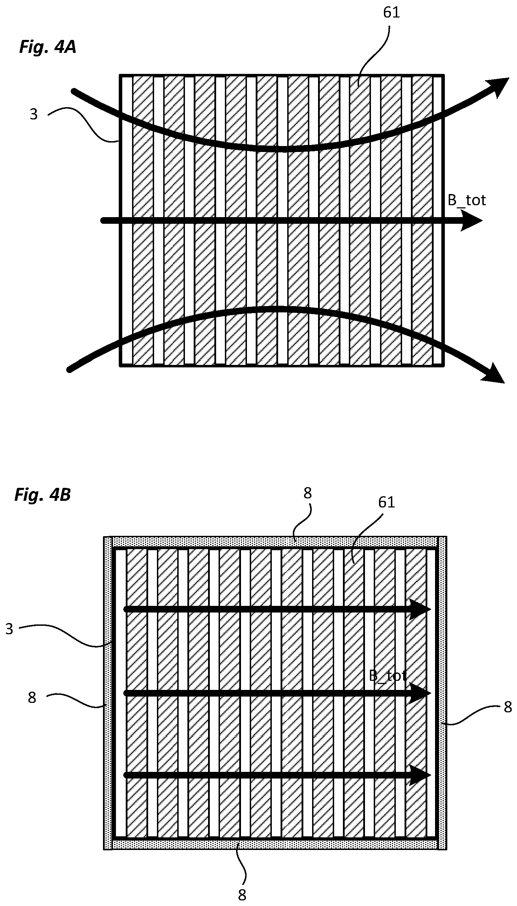

Comme illustré par la figure 4A, lorsque plusieurs cadres 6 du type de l'invention sont juxtaposés dans le corps 2 et/ou dans chaque hausse 3 de la ruche, les cadres 6 sont positionnés de sorte que leurs inductions magnétiques B_i respectives s'ajoutent entre elles, formant une induction magnétique total B_tot traversant le corps 2 et/ou chaque hausse 3 de part en part.

Selon une particularité illustrée par la figure 4B, afin de confiner l'induction magnétique au sein du corps 2 et/ou de chaque hausse 3 de la ruche, on peut ajouter à la ruche une culasse magnétique. Cette culasse peut être composée de plusieurs panneaux 8 métalliques fixés sur les faces externes latérales du corps 2 et/ou de la hausse 3 de la ruche (comme sur la figure 4B), ces panneaux 8 étant joints entre eux pour fermer la culasse autour des plaques 61 magnétiques présentes dans le corps 2. Les panneaux 8 sont par exemple dimensionnés pour recouvrir complètement la surface de chaque face latérale du corps 2 de la ruche et, ainsi, la ceinturer. Le même principe peut être appliqué à chaque nouvelle hausse 3 de la ruche.

De manière avantageuse, on peut imaginer adapter l'induction magnétique présente d'un étage à l'autre de la ruche. A titre d'exemple, on pourrait avantageusement avoir une induction magnétique B_tot de 5 Gauss à travers le corps 2 et une induction magnétique B_tot plus forte au niveau de la hausse 3, par exemple égal à 50 Gauss. De manière non limitative, la plaque 61 peut présenter une épaisseur comprise entre 1mm et 12mm, par exemple de 1 à 3mm lorsqu'elle appartient à un cadre du corps 2 de la ruche et de 10mm lorsqu'elle appartient à un cadre 6 destiné à une hausse 3.

De manière non limitative, il est possible d'utiliser :
- Dans le corps 2, des cadres 6 dotés chacun d'une plaque en élastomère magnétique lisse ou gaufrée, ayant une épaisseur comprise entre 1 et 3mm, avantageusement de 1,5mm, éventuellement recouverte d'une couche de cire, permettant aux abeilles de construire leur habitat à leur façon ; ces cadres ne sont pas forcément destinés à la fabrication de miel et pourront disposer d'un niveau d'aimantation plus faible que celui attribué aux cadres de hausse ;
- Dans chaque hausse 3, des cadres 6 dotés chacun d'une plaque en plastique magnétique ayant une épaisseur plus importante (par exemple 10mm) que celle des plaques en élastomère magnétique présentes dans les cadres du corps 2 de la ruche ; les plaques de ces cadres sont avantageusement alvéolées sur leurs deux faces et sont destinées à la production de miel ; les plaques disposent d'une aimantation qui peut être dix fois plus élevé que celle des plaques du corps 2 de la ruche ;

Les montants 60 du cadre 6 peuvent être fabriqués en bois ou en matériau plastique. Le matériau plastique utilisé peut également être chargé en poudre magnétique, dans les mêmes proportions ou dans des proportions différentes de celle utilisée pour la plaque 61 centrale. Dans ce dernier cas, le cadre peut être réalisé sous la forme d'un ensemble monobloc, incluant les montants 60 et la plaque 61 centrale.

Le cadre 6 de l'invention est compatible avec les outils classiques employés pour la fabrication et le prélèvement du miel (lève cadre, centrifugeuse...). Il peut bénéficier d'un marquage sur chaque montant 60 indiquant le sens de magnétisation, afin de faciliter l'installation dans la ruche et dans les outils classiques.

La solution de l'invention présente ainsi de nombreux avantages, parmi lesquels :
- Elle s'appuie sur les antériorités de feuilles ou films ou cadres en plastique, présentant les mêmes avantages, avec en plus la magnétisation ;
- Elle permet d'obtenir un champ magnétique total globalement uniforme à l'intérieur du corps et/ou de chaque hausse de la ruche et un bon niveau d'induction magnétique ;
- Elle est compatible avec les ruches existantes, sans modification ;
- Elle est compatible avec les solutions actuelles utilisées pour la production et le prélèvement de miel ;
- Elle est facile à fabriquer et à installer ;
- Elle peut intégrer directement les alvéoles utilisées par les abeilles pour la fabrication du miel ;
- Elle permet de profiter de l'aimantation pour les différents travaux de prélèvement du miel et de stockage des cadres ;

## Revendications

1. Cadre (6) pour ruche comprenant plusieurs montants (60) assemblés entre eux et une plaque (61) centrale encadrée par lesdits montants et dotée de deux faces opposées, **caractérisé en ce que** la plaque centrale (61) est fabriquée à partir d'un liant auquel est ajoutée une poudre magnétique et **en ce que** ladite plaque centrale est aimantée suivant une direction transversale à ses deux faces opposées.

2. Cadre selon la revendication 1, **caractérisé en ce que** la poudre magnétique est une poudre de ferrite de strontium ou une poudre de ferrite de baryum.

3. Cadre selon la revendication 1, **caractérisé en ce que** la poudre magnétique est une poudre Néodyme Fer Bore.

4. Cadre selon l'une des revendications 1 à 3, **caractérisé en ce que** le liant est un élastomère, un polymère thermoplastique et/ou un polymère thermodurcissable,

5. Cadre selon l'une des revendications 4, **caractérisé en ce que** le liant est du polypropylène alimentaire.

6. Cadre selon l'une des revendications 4, **caractérisé en ce que** le liant est du polyamide alimentaire.

7. Cadre selon l'une des revendications 1 à 3, **caractérisé en ce que** le liant est un textile tel que du coton végétal et/ou de la cellulose couché de produits minéraux en mélange avec des produits de durcissement.

8. Cadre selon l'une des revendications 1 à 7, **caractérisé en ce que** les deux faces de la plaque (61) sont alvéolées.

9. Cadre selon l'une des revendications 1 à 8, **caractérisé en ce que** ses montants (60) sont réalisés en plastique et/ou en bois.

10. Cadre selon l'une des revendications 1 à 8, **caractérisé en ce que** ses montants (60) sont réalisés dans le même matériau que la plaque centrale.

11. Cadre selon l'une des revendications 1 à 10, **caractérisé en ce que** le cadre est réalisé sous la forme d'un élément monobloc.

12. Cadre selon l'une des revendications 1 à 10, **caractérisé en ce que** la plaque est réalisée par assemblage de plusieurs modules.

13. Cadre selon l'une des revendications 1 à 12, **caractérisé en ce que** la poudre magnétique est ajoutée dans une proportion comprise entre 10% et 50% du volume total.

14. Ruche comprenant un corps (2) formé d'un caisson dans lequel sont placés plusieurs cadres (6) à la verticale, **caractérisée en ce que** ces cadres (6) sont tels que définis dans l'une des revendications 1 à 13.

15. Ruche selon la revendication 14, **caractérisée en ce que** le corps (2) comporte plusieurs faces latérales et **en ce qu'**il comporte une culasse magnétique formée de plusieurs panneaux assemblés chacun sur l'une de ses faces latérales.

16. Ruche comprenant au moins une hausse (3) formée d'un caisson dans lequel sont placés plusieurs cadres (6) à la verticale, **caractérisée en ce que** ces cadres (6) sont tels que définis dans l'une des revendications 1 à 13.

17. Ruche selon la revendication 16, **caractérisée en ce que** la hausse (3) comporte plusieurs faces latérales et **en ce qu'**il comporte une culasse magnétique formée de plusieurs panneaux assemblés chacun sur l'une de ses faces latérales.

## Patentansprüche

1. Rahmen (6) für einen Bienenstock, umfassend mehrere untereinander verbundene Schenkel (60) und eine Mittelwand (61), die von diesen Schenkeln eingefasst wird und mit zwei entgegengesetzten Seiten versehen ist, **dadurch gekennzeichnet, dass** die Mittelwand (61) aus einem Bindemittel hergestellt ist, dem ein magnetische Pulver zugesetzt ist, und dass die Mittelwand entlang einer quer zu ihren beiden entgegengesetzten Seiten verlaufenden Richtung magnetisiert ist.

2. Rahmen nach Anspruch 1, **dadurch gekennzeichnet, dass** das magnetische Pulver ein Strontiumferritpulver oder ein Bariumferritpulver ist.

3. Rahmen nach Anspruch 1, **dadurch gekennzeichnet, dass** das magnetische Pulver ein Neodym-Eisen-Bor-Pulver ist.

4. Rahmen nach einem der Ansprüche 1 bis 3, **dadurch gekennzeichnet, dass** das Bindemittel ein Elastomer, ein thermoplastisches Polymer und/oder ein duroplastisches Polymer ist.

5. Rahmen nach einem der Ansprüche 4, **dadurch gekennzeichnet, dass** das Bindemittel lebensmitteltaugliches Polypropylen ist.

6. Rahmen nach einem der Ansprüche 4, **dadurch gekennzeichnet, dass** das Bindemittel lebensmitteltaugliches Polyamid ist.

7. Rahmen nach einem der Ansprüche 1 bis 3, **dadurch gekennzeichnet, dass** das Bindemittel ein Textil wie pflanzliche Baumwolle und/oder Cellulose ist, das mit mineralischen Erzeugnissen im Gemisch mit Härtungserzeugnissen beschichtet ist.

8. Rahmen nach einem der Ansprüche 1 bis 7, **dadurch gekennzeichnet, dass** die beiden Seiten der Wand (61) wabenartig sind.

9. Rahmen nach einem der Ansprüche 1 bis 8, **dadurch gekennzeichnet, dass** seine Schenkel (60) aus Kunststoff und/oder aus Holz ausgeführt sind.

10. Rahmen nach einem der Ansprüche 1 bis 8, **dadurch gekennzeichnet, dass** seine Schenkel (60) aus dem gleichen Material wie die Mittelwand ausgeführt sind.

11. Rahmen nach einem der Ansprüche 1 bis 10, **dadurch gekennzeichnet, dass** der Rahmen in Form eines einteiligen Elements ausgeführt ist.

12. Rahmen nach einem der Ansprüche 1 bis 10, **dadurch gekennzeichnet, dass** die Wand durch Verbinden von mehreren Modulen ausgeführt ist.

13. Rahmen nach einem der Ansprüche 1 bis 12, **dadurch gekennzeichnet, dass** das magnetische Pulver in einem Anteil zwischen 10 % und 50 % des Gesamtvolumens zugesetzt wird.

14. Bienenstock, umfassend einen Körper (2), der aus einem Kasten gebildet wird, in dem mehrere Rahmen (6) vertikal angeordnet sind, **dadurch gekennzeichnet, dass** diese Rahmen (6) wie in einem der Ansprüche 1 bis 13 definiert sind.

15. Bienenstock nach Anspruch 14, **dadurch gekennzeichnet, dass** der Körper (2) mehrere seitliche Seiten umfasst und dass er ein Magnetjoch umfasst, das aus mehreren Platten gebildet wird, die jeweils an einer ihrer seitlichen Seiten verbunden sind.

16. Bienenstock, umfassend mindestens eine Honigraumzarge (3), die aus einem Kasten gebildet wird, in dem mehrere Rahmen (6) vertikal angeordnet sind, **dadurch gekennzeichnet, dass** diese Rahmen (6) wie in einem der Ansprüche 1 bis 13 definiert sind.

17. Bienenstock nach Anspruch 16, **dadurch gekennzeichnet, dass** die Honigraumzarge (3) mehrere seitliche Seiten aufweist und dass sie ein Magnetjoch umfasst, das aus mehreren Platten gebildet wird, die jeweils an einer ihrer seitlichen Seiten verbunden sind.

## Claims

1. Hive frame (6) comprising a plurality of bars (60) that are joined together and a central plate (61) framed by said bars and having two opposite sides, **characterized in that** the central plate (61) is manufactured from a binder to which a magnetic powder is added and **in that** said central plate is magnetized in a direction transverse to its two opposite sides.

2. Frame according to Claim 1, **characterized in that** the magnetic powder is a strontium-ferrite powder or a barium-ferrite powder.

3. Frame according to Claim 1, **characterized in that** the magnetic powder is a neodymium-iron-boron powder.

4. Frame according to one of Claims 1 to 3, **characterized in that** the binder is an elastomer, a thermoplastic polymer and/or a thermosetting polymer.

5. Frame according to one of Claims 4, **characterized in that** the binder is food-grade polypropylene.

6. Frame according to one of Claims 4, **characterized in that** the binder is food-grade polyamide.

7. Frame according to one of Claims 1 to 3, **characterized in that** the binder is a textile such as natural cotton and/or cellulose coated with mineral products mixed with stiffening products.

8. Frame according to one of Claims 1 to 7, **characterized in that** the two sides of the plate (61) are honeycombed.

9. Frame according to one of Claims 1 to 8, **characterized in that** its bars (60) are made of plastic and/or wood.

10. Frame according to one of Claims 1 to 8, **characterized in that** its bars (60) are made of the same material as the central plate.

11. Frame according to one of Claims 1 to 10, **characterized in that** the frame takes the form of a one-piece element.

12. Frame according to one of Claims 1 to 10, **characterized in that** the plate is produced by joining a plurality of modules.

13. Frame according to one of Claims 1 to 12, **characterized in that** the magnetic powder is added in a proportion of between 10% and 50% of the total volume.

14. Hive comprising a body (2) formed by an enclosure in which a plurality of frames (6) is placed vertically, **characterized in that** these frames (6) are such as defined in one of Claims 1 to 13.

15. Hive according to Claim 14, **characterized in that** the body (2) comprises a plurality of lateral sides and **in that** it comprises a magnetic yoke formed by a plurality of panels each joined to one of its lateral sides.

16. Hive comprising at least one super (3) formed by an enclosure in which a plurality of frames (6) is placed vertically, **characterized in that** these frames (6) are such as defined in one of Claims 1 to 13.

17. Hive according to Claim 16, **characterized in that** the super (3) comprises a plurality of lateral sides and **in that** it comprises a magnetic yoke formed by a plurality of panels each joined to one of its lateral sides.
